# EUROPÄISCHE PATENTSCHRIFT

(11) **EP 1 009 718 B1**
(45) Veröffentlichungstag und Bekanntmachung des Hinweises auf die Patenterteilung: **12.12.2001**
(21) Anmeldenummer: 98942547.5
(22) Anmeldetag: 14.07.1998
(51) Int. Cl.: C02F 1/32

(54) **EINRICHTUNG ZUM ENTKEIMEN VON WASSER, WELCHES EINE SANITÄREINRICHTUNG DURCHSTRÖMT**
DEVICE FOR DEGERMINATING WATER PASSING THROUGH A SANITARY DEVICE
DISPOSITIF PERMETTANT DE DEGERMER L'EAU QUI S'ECOULE PAR UN EQUIPEMENT SANITAIRE

(30) Priorität: 22.08.1997 DE 19736636
(43) Veröffentlichungstag der Anmeldung: 21.06.2000
(73) Patentinhaber: HANSA METALLWERKE AG, 70567 Stuttgart (DE)
(72) Erfinder: KUNKEL, Horst, D-70499 Stuttgart (DE)
(74) Vertreter: Ostertag, Ulrich, Dr.
(86) Internationale Anmeldenummer: EP9804359
(87) Internationale Veröffentlichungsnummer: WO9910281

(56) Entgegenhaltungen:
- DE-A- 3 840 276
- DE-A- 3 924 350
- FR-A- 2 414 480
- GB-A- 2 127 177
- US-A- 5 547 590

## Beschreibung

Die Erfindung betrifft eine Einrichtung zum Entkeimen von Wasser, welches eine Sanitäreinrichtung durchströmt, mit
a) einem Gehäuse, welches einen Einlaß und einen Auslaß für das Wasser aufweist;
b) einer UV-Lampe, die innerhalb des Gehäuses angeordnet und deren Strahlung auf das durchströmende Wasser und ggf. auf eine ebenfalls in dem Gehäuse untergebrachte Filtervorrichtung gerichtet ist;
c) einer Energieversorgungsschaltung für die UV-Lampe;
d) einer Einrichtung zur Erzeugung eines Einschaltsignales für die Energieversorgungsschaltung der UV-Lampe;
e) einem in der Frischwasser-Zufuhrleitung liegenden Magnetventil, welches von einer Ventiltreiberschaltung bestromt wird;
f) einer Steuerschaltung, welche mit der Ventiltreiberschaltung des Magnetventiles, der Energieversorgungsschaltung für die UV-Lampe und mit der Einrichtung zur Erzeugung eines Einschaltsignales für die UV-Lampe in Verbindung steht und derart ausgelegt ist, daß sie die Treiberschaltung für das Magnetventil erst mit einer gewissen Zeitverzögerung nach der Energieversorgungsschaltung für die UV-Lampe aktiviert;
g) einem vom Benutzer betätigbaren Ventil in der Frischwasser-Zufuhrleitung;
h) einem zwischen dem Magnetventil und dem vom Benutzer betätigbaren Ventil in der Frischwasser-Zufuhrleitung liegenden Druckaufnehmer.

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten. Zur Verzögerung der Verweilzeit dieser Mikroorganismen im Bereich der UV-Lampe kann eine zusätzliche Filtervorrichtung eingesetzt werden.

Bei den aus den genannten Versuchen bekannten Einrichtungen wurde die UV-Lampe aktiviert, wenn der Wasserfluß in Gang gesetzt wird, beispielsweise durch einen mechanischen Schalter, der mit dem Betätigungselement des den Wasserstrom steuernden Ventiles mechanisch verbunden war. Da jedoch die UV-Lampe beim Anschalten nicht sofort mit voller Strahlungsleistung brennt, war bei diesen bekannten Einrichtungen die Entkeimungsleistung in der Anfangsphase nach dem Einschalten unzureichend.

Eine gattungsgemäße Vorrichtung ist aus der DE 39 24 350 A1 bekannt. Als Einrichtung zum Erzeugen eines Einschaltsignals dient dort ein Schalter, der über eine Steuerschaltung 2 eine UV-Lampe aktiviert.

Weitere Einrichungen zum Entkeimen von Wasser mit Hilfe einer UV-Lampe, die Steuerschaltungen verwenden, die die Ventiltreiberschaltung für das Zulaufventil in der Wasserzuführleitung mit Zeitverzögerung verglichen mit dem Einschalten der UV-Lampe aktivieren, sind bekannt aus der GB 21 27 117 A, FR 24 14 480 A und der DE 38 40 276 A.

Beim Auftreten eines "Einschaltsignales", welches den Wunsch eines Benutzers signalisiert, Wasser zu zapfen, wird der Wasserstrom nicht sofort in Gang gesetzt. Vielmehr sorgt die Steuerschaltung zunächst dafür, daß die Energieversorgungsschaltung für die UV-Lampe aktiviert wird. Diese wird also gezündet und kommt innerhalb weniger Sekunden auf Betriebstemperatur, wonach sich ihr Betriebszustand stabilisiert und die volle Leuchtleistung erreicht wird. Erst wenn dies der Fall ist, also nach einer bestimmten zeitlichen Verzögerung, aktiviert die Steuerungselektronik auch die Ventiltreiberschaltung für das erfindungsgemäß vorgesehene zusätzliche Magnetventil; erst jetzt beginnt Wasser zu strömen, welches dann innerhalb des Gehäuses der Einrichtung auf eine voll aktivierte und daher maximal entkeimende UV-Lampe trifft.

Bei den bekannten Entkeimungseinrichtungen wird das Einschaltsignal für die UV-Lampe über einen separat zu bedienenden Schalter erzeugt. Wird dieser Schalter, z.B. aus Unkenntnis, nicht betätigt, ist eine Wasserentnahme nicht möglich.

Aufgabe der vorliegenden Erfindung ist es, eine Einrichtung der eingangs genannten Art so auszugestalten, daß eine automatische Aktivierung der UV-Lampe auf einen Zapfwunsch des Benutzers hin gewährleistet ist, der durch das Öffnen des vom Benutzer betätigbaren Ventils in der Frischwasserzufuhr in bei Sanitäreinrichtungen gewohnter Weise erfolgt.

Diese Aufgabe wird erfindungsgemäß dadurch gelöst, daß
i) das Magnetventil stromauf von dem vom Benutzer betätigbaren Ventil in der Frischwasser-Zufuhrleitung angeordnet ist und daß
j) ein einen Druckabfall feststellendes Signal des Druckaufnehmers als Einschaltsignal für die Energieversorgungsschaltung genutzt wird.

Das Magnetventil dient also gleichzeitig als Teil der Einrichtung zur Erzeugung eines Einschaltsignales. Diese Einrichtung verwendet als "Steuergröße", welche den Wunsch des Benutzers zum Beginn und Beendigen eines Zapfvorganges anzeigt, den Druck innerhalb des Stückes der Frischwasser-Zufuhrleitung, welches zwischen dem zusätzlichen Magnetventil und einem vom Benutzer betätigbaren Ventil liegt. Unter "vom Benutzer betätigbar" wird nicht nur die direkte mechanische Betätigung, beispielsweise mittels des Hebels eines Einhebelmischers, durch den Benutzer verstanden. "Vom Benutzer betätigbar" im Sinne der vorliegenden Erfindung ist auch ein berührungslos angesteuertes Magnetventil.

Die Zeitverzögerung zwischen dem Einschalten der Energieversorgungsschaltung für die UV-Lampe und dem Aktivieren der Ventiltreiberschaltung für das Magnetventil sollte etwa in der Größenordnung zwischen 0,2 und 3 sec liegen.

Es empfiehlt sich, die erfindungsgemäße Einrichtung mit einer Sichtanzeige zu versehen, die unmittelbar beim Auftreten des Einschaltsignales aktiviert wird. Der Benutzer weiß durch das Aufleuchten dieser Sichtanzeige, daß die Einrichtung funktioniert, obwohl das Wasser nicht sofort zu strömen beginnt. Hierdurch werden Irritationen des Benutzers vermieden.

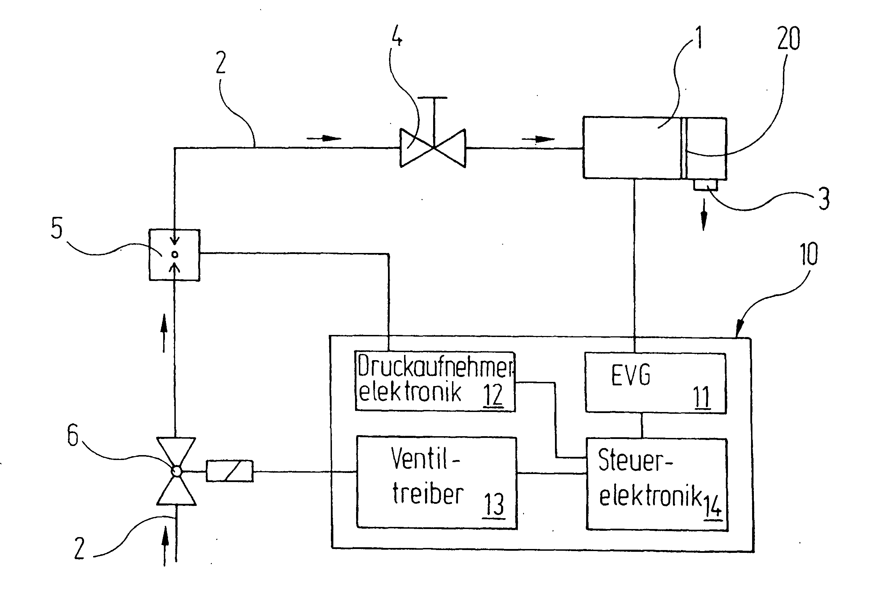

Ein Ausführungsbeispiel der Erfindung wird nachfolgend anhand der Zeichnung näher erläutert; die einzige Figur zeigt schematisch ein Blockschaltbild und die zugehörigen Hardware-Komponenten einer Einrichtung zur Entkeimung und Filtrierung von Wasser, welches eine sanitäre Auslaufarmatur durchströmt.

In der Zeichnung ist mit dem Bezugszeichen 1 schematisch eine sanitäre Auslaufarmatur gezeigt, die im dargestellten Ausführungsbeispiel als Wannenauslauf gedacht werden kann, die aber auch Teil einer vollständigen, das Ventil enthaltenden Sanitärarmatur, beispielsweise eines Einhebelmischers, sein kann. Statt des Wannenauslaufes 1 kann es sich auch um eine Brause oder dergleichen handeln.

Der Wannenauslauf 1 wird über eine Frischwasser-Zufuhrleitung 2 mit Wasser versorgt, in dem sich möglicherweise Mikroorganismen, wie Amöben, Bakterien oder ähnliche Einzeller, befinden. Zu deren Beseitigung sind innerhalb des Wannenauslaufes 1 eine UV-Lampe und eine Filtervorrichtung (nicht dargestellt) integriert. Die UV-Lampe bestrahlt das durchströmende Wasser sowie die Filtervorrichtung, und tötet hierdurch die Mikroorganismen ab, die vom Wasser mitgeführt und/oder von der Filtervorrichtung zurückgehalten werden. Aus der Auslauföffnung 3 des Wannenauslaufes 1 tritt daher weitestgehend keimfreies und filtriertes Wasser aus.

Stromauf von dem Wannenauslauf 1 ist in der Zeichnung ein vom Benutzer betätigbares Ventil 4 erkennbar, bei dem es sich entweder um ein mechanisch durch direkte Krafteinwirkung des Benutzers betätigtes Ventil oder auch um ein mittelbar berührungslos durch den Benutzer gesteuertes Magnetventil handeln kann. Noch weiter stromauf ist in die Frischwasser-Zufuhrleitung 2 ein Druckaufnehmer 5 eingefügt; diesem wird das Frischwasser von einem Magnetventil 6 zugeführt, welches das erste "Glied" in der Frischwasser-Zufuhrleitung 2 ist.

Mit dem Bezugszeichen 10 ist in der Zeichnung insgesamt die Schaltungsanordnung gekennzeichnet, welche zum Betrieb der oben geschilderten Hardware-Komponenten 1 bis 6 eingesetzt wird. Die Schaltungsanordnung 10 umfaßt eine Energieversorgungsschaltung 11 für die in dem Wannenauslauf 1 integrierte UV-Lampe, eine Druckaufnehmer-Elektronik 12, welche das vom Druckaufnehmer 5 gelieferte Drucksignal verarbeitet, eine Ventiltreiberschaltung 13, welche das Magnetventil 6 bestromt, sowie eine das Zusammenwirken der o.g. Teilkomponenten der Schaltungsanordnung 10 steuernde Steuerelektronik 14.

Die oben beschriebene Schaltungsanordnung arbeitet wie folgt:

Die dem vom Benutzer betätigten Ventil 4 innerhalb der Frischwasser-Zufuhrleitung 2 vorgelagerten Komponenten 5 und 6 dienen als Einrichtung zur Erzeugung eines Einschaltsignales in der folgenden Weise:

Als Ausgangssituation sei angenommen, daß das vom Benutzer betätigte Ventil 4 geschlossen ist, aus der Auslauföffnung 3 also kein Wasser ausfließt. Der in dem Leitungsstück zwischen dem vorgeschalteten Magnetventil 6 und dem benutzerbetätigten Ventil 4 eingesetzte Druckaufnehmer 5 mißt den vollen Systemdruck, der noch von dem vorausgegangenen Arbeitszyklus herrührt. Wird nunmehr durch Einwirkung des Benutzers das Ventil 4 geöffnet, fällt am Druckaufnehmer 5 der Druck stark ab. Die Druckaufnehmer-Elektronik 12 gibt ein entsprechendes Signal an die Steuerelektronik 14 ab, die den "Wunsch" des Benutzers erkennt, Wasser aus dem Wannenauslauf 1 zu zapfen. Da das Magnetventil 6 noch geschlossen ist, fließt zunächst aus der Auslauföffnung 3 des Wannenauslaufes 1 kein Wasser. Die Steuerelektronik 14 aktiviert jedoch sofort beim Auftreten des den Druckabfall signalisierenden Signales des Druckaufnehmers 5 die Energieversorgungsschaltung 11 für die im Wannenauslauf 1 befindliche UV-Lampe. Diese wird daher zu diesem Zeitpunkt gezündet. Unmittelbar nach dem Zünden entwickelt die UV-Lampe jedoch noch nicht ihre volle Leistung, die zum zuverlässigen Abtöten der vom Wasser mitgeführten Mikroorganismen ausreichen würde. Die Steuerelektronik 14 wartet daher eine gewisse Zeitspanne zu, die erfahrungsgemäß ausreicht, damit die UV-Lampe auf ihre volle Leistung hochfahren kann. Erst nach Verzögerung um diese Zeitspanne aktiviert die Steuerelektronik 14 die Ventiltreiber-Schalltung 13, die dann das Magnetventil 6 so bestromt, daß es öffnet. Nunmehr fließt Frischwasser durch die Frischwasser-Zufuhrleitung 2, an dem Druckaufnehmer 5 vorbei durch das vom Benutzer bereits geöffnete Ventil 4 zum Wannenauslauf 1, wo es an der mit voller Leistung brennenden UV-Lampe vorbei, durch die Filtervorrichtung hindurch und so gereinigt aus der Auslauföffnung 3 des Wannenauslaufes 1 strömen kann.

Benötigt der Benutzer kein Wasser mehr, so schließt er (wiederum direkt oder mittelbar) das Ventil 4. Der Druckaufnehmer 5 fühlt den dadurch bedingten Druckanstieg. Das entsprechende Signal wird von der Druckaufnehmer-Elektonik 12 an die Steuerelektronik 14 abgegeben. Diese schließt nun zum einen über ein entsprechendes an die Ventiltreiberschaltung 13 gegebenes, Signal das Magnetventil 6 wieder und desaktiviert außerdem - ggf. mit einer gewissen Zeitverzögerung - die Energieversorgungsschaltung 11 für die im Wannenauslauf 1 befindliche UV-Lampe.

Damit der Benutzer durch den verzögert eintretenden Wasserfluß nicht irritiert wird, ist in den Wannenauslauf 1 eine Sichtanzeige 20 integriert. Diese leuchtet, sobald die UV-Lampe aktiviert ist, auf und signalisiert dem Benutzer, daß die Einrichtung arbeitet.

## Patentansprüche

1. Einrichtung zum Entkeimen von Wasser, welches eine Sanitäreinrichtung durchströmt, mit
a) einem Gehäuse, welches einen Einlaß und einen Auslaß für das Wasser aufweist;
b) einer UV-Lampe, die innerhalb des Gehäuses angeordnet und deren Strahlung auf das durchströmende Wasser und ggf. auf eine ebenfalls in dem Gehäuse untergebrachte Filtervorrichtung gerichtet ist;
c) einer Energieversorgungsschaltung für die UV-Lampe;
d) einer Einrichtung zur Erzeugung eines Einschaltsignales für die Energieversorgungsschaltung der UV-Lampe;
e) einem in der Frischwasser-Zufuhrleitung zu dem Gehäuse liegenden Magnetventil, welches von einer Ventiltreiberschaltung bestrombar ist;
f) einer Steuerschaltung, welche mit der Ventiltreiberschaltung des Magnetventils, der Energieversorgungsschaltung für die UV-Lampe und mit der Einrichtung zur Erzeugung eines Einschaltsignales in Verbindung steht und derart ausgelegt ist, daß sie die Ventiltreiberschaltung erst mit einer gewissen Zeitverzögerung nach der Energieversorgungsschaltung für die UV-Lampe aktiviert;
g) einem vom Benutzer betätigbaren Ventil in der Frischwasser-Zufuhrleidung;
h) einem zwischen dem Magnetventil und dem vom Benutzer betätigbaren Ventil in der Frischwasser-Zufuhrleitung liegenden Druckaufnehmer;
**dadurch gekennzeichnet, daß**
i) das Magnetventil (6) stromauf von dem vom Benutzer betätigbaren Ventil (4) in der Frischwasser-Zufuhrleitung (2) angeordnet ist und daß
j) ein einen Druckabfall feststellendes Signal des Druckaufnehmers (5) als Einschaltsignal der Energieversorgungsschaltung (11) für die UV-Lampe genutzt wird.

2. Einrichtung nach Anspruch 1, **dadurch gekennzeichnet, daß** die Zeitverzögerung 0,2 bis 3 sec beträgt.

3. Einrichtung nach einem der vorhergehenden Ansprüche,
**dadurch gekennzeichnet, daß** sie mit einer Sichtanzeige (20) versehen ist, die unmittelbar beim Auftreten des Einschaltsignales aktiviert wird.

## Claims

1. An apparatus for sterilizing water flowing through a sanitary installation, with
a) a housing which comprises an inlet and an outlet for the water;
b) an UV lamp which is arranged within the housing, the radiation of said UV lamp being directed onto the water flowing through and optionally onto a filter device which is likewise accommodated in the housing;
c) a power-supply circuit for the UV lamp;
d) an apparatus for generating an energizing signal for the power-supply circuit of the UV lamp;
e) a solenoid valve situated in the freshwater supply pipe leading to the housing, said solenoid valve being capable of being supplied with current by a valve-driving circuit;
f) a control circuit which is connected to the valve-driving circuit of the solenoid valve, to the power-supply circuit for the UV lamp and to the apparatus for generating an energizing signal for the UV lamp and which is designed in such a way that it activates the driving circuit for the solenoid valve only with a certain time-delay after the power-supply circuit for the UV lamp;
g) a valve in the freshwater supply pipe that is capable of being actuated by the user;
h) a pressure gauge situated between the solenoid valve and the valve in the freshwater supply pipe that is capable of being actuated by the user;
**characterised in that**
i) the solenoid valve (6) is arranged upstream of the valve (4) in the freshwater supply pipe (2) that is capable of being actuated by the user and **in that**
j) a signal of the pressure gauge (5) detecting a drop in pressure is utilised as an energizing signal of the power-supply circuit (11) for the UV lamp.

2. Apparatus according to Claim 1, **characterised in that** the time-delay amounts to 0.2 to 3 sec.

3. Apparatus according to one of the preceding claims, **characterised in that** it is provided with a visual indicator (20) which is activated immediately when the energizing signal appears.

## Revendications

1. Dispositif de dégermage de l'eau circulant à travers un équipement sanitaire, avec
a) un boîtier comportant une entrée et une sortie pour l'eau,
b) une lampe à ultraviolets, qui est disposée à l'intérieur du boîtier et dont le rayonnement est dirigé sur l'eau en circulation et éventuellement sur un dispositif de filtration également logé dans le boîtier,
c) un circuit d'alimentation en énergie pour la lampe à ultraviolets,
d) un dispositif pour générer un signal de commutation pour le circuit d'alimentation en énergie de la lampe à ultraviolets,
e) une vanne magnétique disposée dans la conduite d'alimentation en eau fraîche menant au boîtier, qui peut être commandée par un circuit d'excitation de la vanne,
f) un circuit de commande qui est relié au circuit d'excitation de la vanne de la vanne magnétique, au circuit d'alimentation en énergie de la lampe à ultraviolets et au dispositif pour générer un signal de commutation, et qui est configuré de telle sorte qu'il n'active le circuit d'excitation de la vanne qu'avec un certain temps de retard après le circuit d'alimentation en énergie de la lampe à ultraviolets,
g) une vanne pouvant être actionnée par l'utilisateur placée dans la conduite d'alimentation en eau fraîche,
h) un capteur de pression disposé entre la vanne magnétique et la vanne pouvant être actionnée par l'utilisateur dans la conduite d'alimentation en eau fraîche,
**caractérisé en ce que**
i) la vanne magnétique (6) est disposée en amont de la vanne pouvant être actionnée par l'utilisateur (4) dans la conduite d'alimentation en eau fraîche (2), et **en ce que**
j) chaque signal du capteur de pression (5) indiquant une baisse de pression est utilisé comme signal de commutation du circuit d'alimentation en énergie (11) de la lampe à ultraviolets.

2. Dispositif selon la revendication 1, **caractérisé en ce que** le temps de retard est de 0,2 à 3 secondes.

3. Dispositif selon l'une quelconque des revendications précédentes, **caractérisé en ce qu'**il est équipé d'un indicateur visuel (20) qui est activé dès qu'est généré le signal de commutation.
